# EUROPEAN PATENT APPLICATION

(11) **EP 2 107 754 A1**
(43) Date of publication of application: **07.10.2009**
(21) Application number: 08103356.5
(22) Date of filing: 03.04.2008
(51) Int. Cl.: H04L 29/06, H04N 5/00

(54) **Method and device for data processing and communication system comprising such device**

(71) Applicant: Nokia Siemens Networks Oy, 02610 Espoo (FI)
(72) Inventor: Martins, Nuno, 2745.112 Queluz (PT); Silva, Renata, 1750.372 Lisboa (PT)

(57) **Abstract**

A method and a device are provided for data processing, wherein a backend device is remotely triggered to initiate a service on a client device, and wherein said service is a service for IPTV-oriented management and/or diagnosis. In addition, a communication system comprising such device is suggested.

## Description

The invention relates to a method and to a device for data processing and to a communication system comprising such a device.

With multimedia services evolving and mass rollouts being deployed, high operational efficiency as well as high quality of service (QoS) is getting more important.

This is particularly important as problems at the user's premises may largely affect the user's acceptance to the multimedia service provided. The devices may be distributed at distant locations among the customers' premises and a problem at such device cannot be handled fast in case a technician has to arrive on-site.

The DSL Forum (www.dslforum.org) issued a technical report TR-069 entitled "CPE WAN Management Protocol" defining a protocol for communication between a CPE and an Auto-Configuration Server (ACS) that encompasses secure auto-configuration as well as other CPE management functions within a common framework.

The **problem** to be solved is to overcome the disadvantages mentioned above and in particular to provide an improved approach to cope with various service issues at a client's device from a remote location.

This problem is solved according to the features of the independent claims. Further embodiments result from the depending claims.

In order to overcome this problem, a method for data processing is provided
- wherein a backend device is remotely triggered to initiate a service on a client device,
- wherein said service is a service for IPTV-oriented management and/or diagnosis.

One particular advantage of this approach is to effectively support diagnosis, inspection and/or management applicable in particular for IPTV environments. The client device that is supported and remotely administered is in particular a customer premises equipment (CPE), e.g., a set-top box (STB). It is noted that IPTV refers to any sort of video delivery environment, in particular comprising streaming video provided to a client device via at least one communication network.

Advantageously, the approach suggested allows improving the subscriber perception of the service support quality resulting in a higher satisfaction with the service provided. In addition, troubleshooting costs for the service provider can be significantly reduced, in particular because operations for diagnostics and troubleshooting can be centrally processed from a back-office or remote location.

It is noted that as a communication medium all kinds of fixed lines or wireless connections may be applicable, in particular in combination(s) thereof.

In an embodiment, the backend device is remotely triggered by a front-end.

In another embodiment, said front-end is accessible via a common interface, in particular via the Internet.

The front-end may be located anywhere in a communication network. It may be provided to the user of the client device and/or to the operator or service provider. It can even be accessible from a centralized location of a communication network. It is also an alternative that said front-end is deployed and/or associated with the backend device.

In a further embodiment, the client device is associated with and/or comprises at least one of the following:
- a set-top box;
- a computer device, in particular a personal computer;
- a receiver, in particular combined with a CD and/or DVD player and/or recorder;
- a mobile device;
- a personal digital assistant;
- a mobile phone;
- an interface device, in particular a mobile interface device.

Hence, there may be various realization as how the client device can be deployed. It may in particular be a piece of software that is run on a machine which also provides additional functionality that may even not at all be IPTV-related.

It is noted that the client device may be a functionality added to a wireless device, e.g., a mobile terminal (UE, user equipment) or any portable device that may in particular be supplemented by a particular interface (e.g., WiMAX, WLAN, 3G, EDGE, etc.). However, such device may also be connected to a fixed line or network utilizing various kinds of connections (e.g., LAN, DSL, Cable etc.).

In a next embodiment, the backend device is associated with and/or comprises at least one of the following:
- a server, in particular a content server;
- an operation and maintenance center;
- a device deployed with an operator or service provider;
- a remote communication entity.

The backend device may in particular be deployed with an operator or service provider. The backend device may also be deployed with a centralized operation and maintenance function (that can but does not have to be processed by the operator or provider). The backend device may be or comprise a piece of software that is run on a computer, in particular on a centralized machine that may in particular be deployed at any place remote or locally within a communication network.

It is also an embodiment that said service comprises at least one of the following:
- enable disable a test signal, in particular a color bar;
- process and/or initiate a hard-disc de-fragmentation;
- process and/or initiate an auto diagnostics;
- provide a ports list, in particular to the backend device;
- provide information regarding digital video broadcasting;
- provide a user profile, in particular to the backend device.

These are some examples of services regarding IPTV-oriented management and/or diagnosis that are remotely triggered and at least partially processed by the client device.

Pursuant to another embodiment, a TR-069 protocol is used and/or extended for a communication between the client device and the backend device.

Said TR-069 protocol may in particular be extended to provide the functionality of at least one of the services described herein.

The problem stated above is also solved by a device for processing data comprising a and/or associated with a processor unit and/or a hard-wired circuit and/or a logic device that is arranged such that the method as described herein is executable thereon.

According to an embodiment, the device is a communication device, in particular a device that is or is associated with a device deployed with a provider or operator. Also, said device may be or be associated with a device deployed with a customer premises equipment.

The problem stated supra is further solved by a communication system comprising the device as described herein.

Embodiments of the invention are shown and illustrated in the following figures:
- Fig.1: shows an architecture of events (messages) between components in order to enable and/or disable a Color Bar on a display associated with a client device;
- Fig.2: shows an architecture of events (messages) between components in order to de-fragment a hard-disk of the client device;
- Fig.3: shows an architecture of events (messages) between components in order perform auto diagnostics on the client device or in order to obtain a ports list from the client device;
- Fig.4: shows an architecture of events (messages) between components in order to obtain DVB conditions from the client device;
- Fig.5: shows an architecture of events (messages) between components in order to obtain user settings from the client device.

The approach provided enables supplementary functionalities in particular for video delivery environments. Hereinafter, several scenarios or embodiments are described that are utilized in the area of remote service administration on a client device, in particular a set-top box deployed with a customer.

### Color Bar

Such "Color Bar" functionality allows enabling and/or disabling a color bar on a client device. The color bar may comprise several vertical bars of predefined width, wherein each such bar has different color. Preferably, several vertical bars, each of the same width are attached to one another showing a color gradient on a user's display. The color bar may be a color bar according to the European Broadcasting Union's (EBU) test card. However, any sort of color bar, i.e. test card signal may be applicable as well.

Enabling and/or disabling of the color bar can be remotely triggered by a backend device to be displayed via a client device on the client's screen (e.g., on a monitor or television).

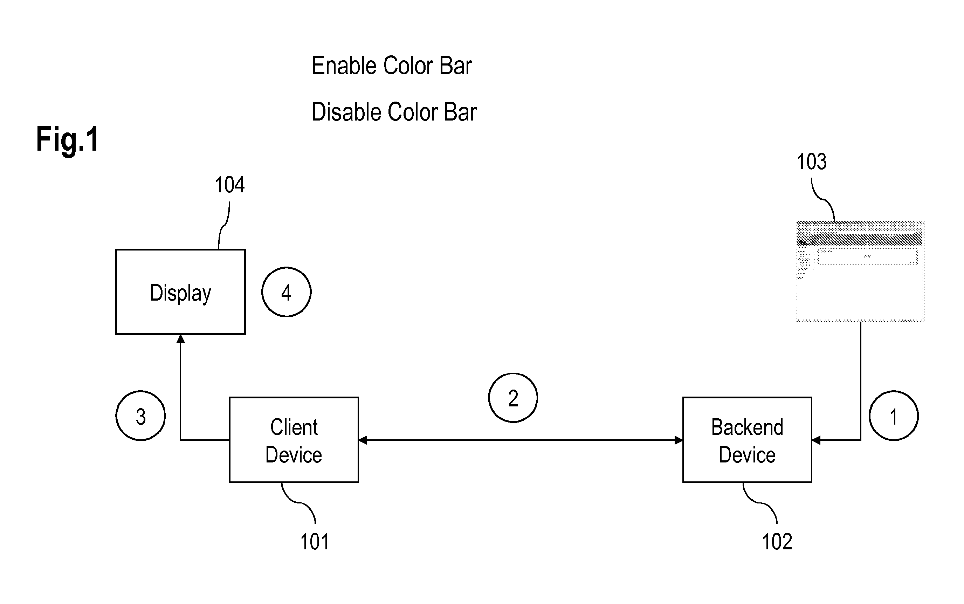

**Fig.1** shows an architecture of events (messages) between components in order to enable and/or disable said Color Bar.

The single steps or events according to Fig.1 are as follows:
1. A particular mechanism may enable the color bar, e.g., via a front-end 103 that may be realized as a graphical user interface (GUI) that is accessible, e.g., via the Internet. Hence, said front-end 103 conveys such trigger to a backend device 102. However, said trigger to display the color bar may be provided directly by the client and/or by the service provider or by any component within the network.
2. The backend device 102 communicates to a client device 101 that the color bar should be displayed. Such communication can be achieved by utilizing, e.g., an extended TR-069 protocol. It can, however, be realized by various other protocols.
3. The client device 101 generates the color bar and sends it to the display 104 of the client device 101.
4. The color bar is visualized on the display 104.

It is noted that the backend device 102 may be any network component realized as a single device or as a distributed device at one or various locations throughout the network. It may in particular be a server deployed at the premises of an operator or content provider or with an operation and maintenance (O&M) facility or with such O&M provider. The backend device 102 may in particular be any kind of remote communication entity.

It is also noted that said client device 101 may be any device capable of processing video applications, e.g., a set-top box, a personal computer or any (mobile) machine. The communication medium may vary, e.g., fixed line or wireless support to convey video applications may be utilized.

It is further noted that it may not be necessary to assert whether or not the color bar is correctly displayed on said display 104. It may be up to the end user to evaluate whether the color bar is correctly displayed.

Using the color bar allows checking if the display 104 correctly visualizes the output of the client device 101. This is particularly relevant for helpdesk applications allowing the user at home to acknowledge that the video signal is being correctly displayed.

A similar mechanism can be provided in order to disable said color bar. The steps, as described above, are similar except that step one comprises a request to disable the color bar.

### Hard-Disc Drive De-fragmentation

A hard-disc de-fragmentation service (request) allows a hard-disk at the client device to be de-fragmented.

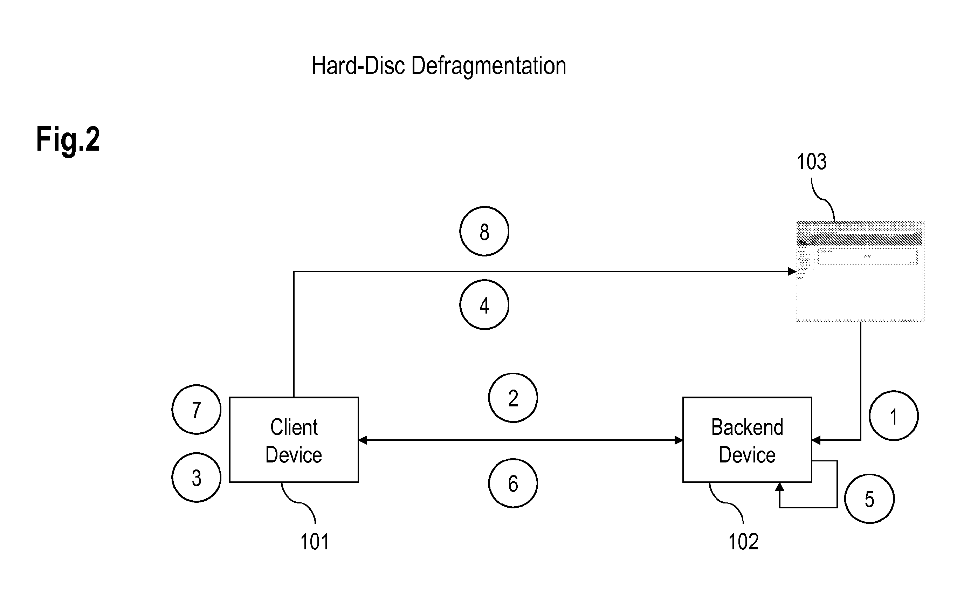

**Fig.2** shows an architecture of events (messages) between components in order to de-fragment the hard-disk of the client device 101.

The single steps or events according to Fig.2 are as follows:
1. A particular mechanism requests or triggers a request regarding a fragmentation level of a hard-disc located at the client device 101. Such trigger can be provided via the front-end 103 to the backend device 102.
2. The request for checking the fragmentation level is conveyed from the backend device 102 to the client device 101.
3. The request for checking the fragmentation level is processed at the client device 101.
4. The fragmentation level is returned from the client device 101 to the calling system, i.e. the backend device 102.
5. It is determined whether a fragmentation level is above a particular threshold and thus whether a defragmentation request is to be sent from the backend device 102 to the client device 101.
   Note that such checking whether the fragmentation threshold was exceeded can be done automatically or it can be subject to acknowledgement.
6. A request for the disc de-fragmentation is sent from the backend device 102 to the client device 101.
7. Hard disc de-fragmentation is processed at the client device 101.
8. After having finished the disc de-fragmentation, the client device 101 informs the calling system about the success of the operation.

It is noted that an automatic method for detecting a fragmentation level that is above a given threshold could be implemented on the client device. In such a case, the hard disc de-fragmentation starts with step 4.

### Auto Diagnostics

The auto diagnostics allows initiating a set of tests to be run on the client device 101. Such tests may be performed when there are severe problems at the client device 101, e.g., the client device 101 freezes, hangs or does not respond to user requests.

Several tests can be performed within said diagnostics, comprising, e.g., generating a color bar for a pre-defined amount of time, DVB frequency scanning and checking the hardware (e.g., hard disc, CPU, memory, network interface controller, etc.) of the client device 101.

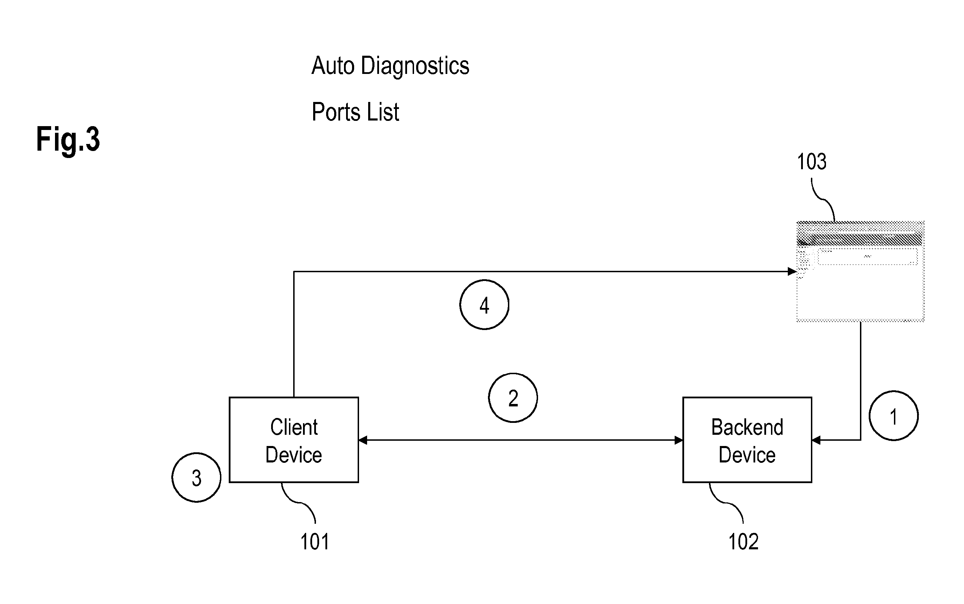

**Fig.3** shows an architecture of events (messages) between components in order perform auto diagnostics on the client device 101.

The single steps or events according to Fig.3 are as follows:
1. From the front-end 103, the automatic diagnostics event is remotely triggered by conveying a message to the backend device 102.
2. A message or request is sent from the backend device 102 to the client device 101 utilizing, e.g., an extended version of the TR-069 protocol.
3. The client device 101 initiates and runs auto diagnostics.
4. After auto diagnostics or at least a portion thereof is finished, the client device 101 informs the calling system (here the backend device 102 or the front-end 103) about the result.
   It is noted that the front-end 103 may in particular be also part of the backend system, e.g., deployed with a service or content provider. It is also an option that the backend device 102 is informed about the result of the action processed at the client device 101 (e.g., diagnosis or de-fragmentation status in particular prior to the result being displayed via the front-end 103).

### Digital Video Broadcasting (DVB)

It is also an option to obtain DVB reception conditions data from the client device 101. This may in particular comprise a DVB reception range, e.g. the number of transponders found, as well as a reception conditions in terms of a bit error rate (BER) and/or a signal to noise ratio (SNR). With such results it is possible to identify reception conditions and if correlating these metrics infer a quality of service (QoS) and/or a quality of experience (QoE) delivered to the end user.

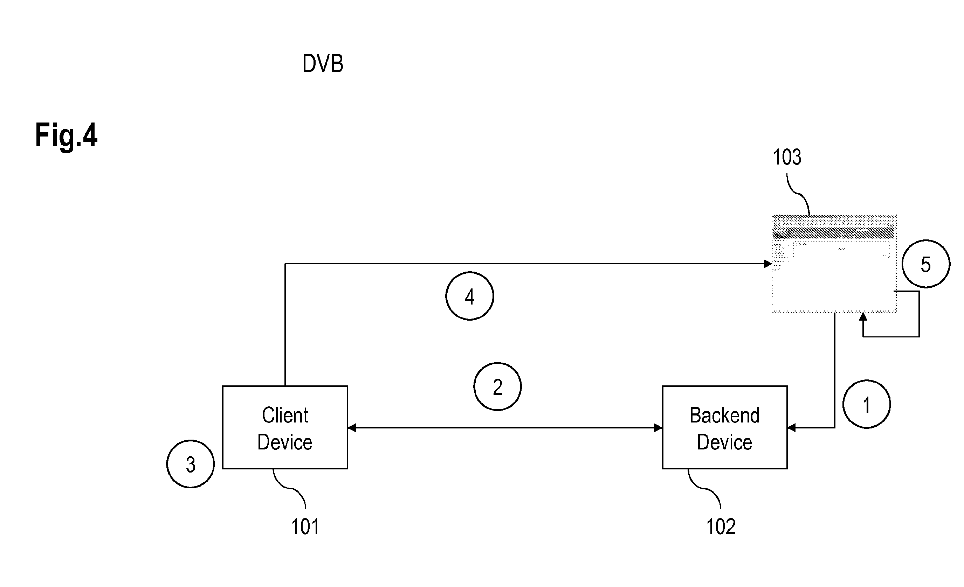

**Fig.4** shows an architecture of events (messages) between components in order to obtain such DVB conditions from the client device 101.

The single steps or events according to Fig.4 are as follows:
1. The front-end 103 sends a message to the backend device 102 initiating a request to obtain DVB reception conditions data.
2. The request is sent from the backend device 102 to the client device 101 utilizing, e.g., an extended version of the TR-069 protocol.
3. The client device 101 gathers the information requested.
4. The information gathered is sent from the client device 101 to the calling system (front-end 103 or backend device 102).
5. The calling system utilizes said gathered information provided by the client device 101 in order to determine QoE and/or QoS metrics.

### User Profile

By obtaining a user profile from the client device 101, the provider may be enabled to become aware of a configuration set at a CPE and hence may be able to detect and solve problems from a remote location.

The user settings may be considered sensitive. Therefore a mechanism is suggested requesting a user to acknowledge that his or her settings will be retrieved from the client device 101.

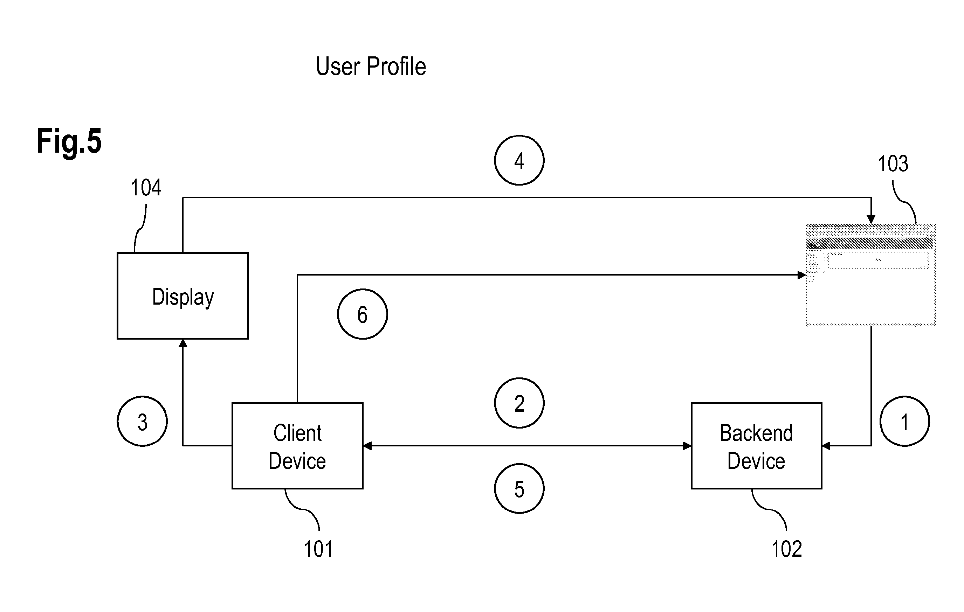

**Fig.5** shows an architecture of events (messages) between components in order to obtain user settings from the client device 101.

The single steps or events according to Fig.5 are as follows:
1. Via said front-end 103, the request to obtain user profile is initiated and sent to the backend device 102.
2. The request is sent from the backend device 102 to the client device 101 utilizing, e.g., an extended version of the TR-069 protocol. Such request may comprise an acknowledgement request.
3. The acknowledgement request is visualized on the display 104. This may be done by a popup-window indicating that a request for the user profile has been launched and confirmation to provide such user profile back to the calling system is required from the user.
4. In case of user's confirmation, such acknowledgment is sent to the calling system.
5. If the user agreed with the retrieval of his or her user profile, the calling systems sends a request to get the user profile information.
6. The user profile is sent to the calling system.

### Ports List

Getting aware of the ports list of the client device 101, the provider obtains information about open connections (sockets) from the client device 101 to the network. Such information is useful for tracking problems regarding missing data or potential security issues due to open ports that should not be open. Such ports list may also comprise ports of the client device that are in a listening mode for inbound connections as well as for established connections.

**Fig.3** is applicable also for this scenario obtaining said ports list from the client device 101.

The single steps or events based on the illustration shown in Fig.3 may be as follows:
1. Via said front-end 103, the request to obtain said ports list is initiated and sent to the backend device 102.
2. The request is sent from the backend device 102 to the client device 101 utilizing, e.g., an extended version of the TR-069 protocol.
3. The client device 101 gets the ports list. This may comprise information regarding port number, protocol the local and remote addresses.
4. The information gathered by the client device 101 is returned to the calling system.

### STB Diagnostic Extensions

There may be limitations in remote management protocols and some extensions may be used for diagnostic purposes. This allows enhancing the data model so that additional information can be obtained for an accurate diagnostic. The following extensions can be provided:
a. Firmware version:
   This extension allows to obtain a version of the firmware stored with the client device. Advantageously, based on said firmware version, it can be remotely determined whether the client device is up-to-date or whether the firmware is the cause for particular problems (known with said version).
b. Device unique identifier:
   Such extension may allows getting an unique identifier of the client device. Such identifier may be stored in non-volatile memory with said client device.
c. DHCP Server:
   This extension allows getting the DHCP server from which the client device is getting information. This allows checking if the client device is getting the information from the appropriate server.

### Extending TR-069 Protocol

The functionalities described above can be applied to any remote management protocol.

Regarding TR-069, extensions can be provided as set forth hereinafter in order to include the functionalities described above.

Hereinafter, "Functionality" indicates to which functionality and/or service described above the respective extension(s) relate(s) to. The first column indicates whether the object is read-only (R) or read-write (RW). The second column indicates the name of the object, the third column refers to the object/parameter. The last column is a brief description of the respective object.

### FUNCTIONALITY: DIAGNOSTIC EXTENSION

| | | | |
|---|---|---|---|
| R | X_<*VENDOR*>_FirmwareVersion | string(64) | A string identifying the firmware version currently installed in the client device (CPE). |
| | | | To allow version comparison, this element may be in the form of dot-delimited integers, where each successive integer represents a more minor category of variation. For example, 3.0.21 wherein the components refer to: Major.Minor.Build. |
| R | X_<*VENDOR*>_STBUI | string(64) | The STB's unique identifier. |
| | Device.LAN.{i}. | object | This object comprises parameters relating to IP-based LAN connectivity of a device. |
| RW | X_<*VENDOR*>_DHCPServer | string(64) | The IP address of the DHCP server. |

### FUNCTIONALITY: PORTS LIST

| | | | |
|---|---|---|---|
| R | X_<*VENDOR*>_Active PortsNumberOfEntries | unsignedlnt | The number of ports in LISTEN or ESTABLISHED state. |
| | Device.LAN.{i}.X_<*VENDOR*>_ActivePorts.{i} | Object | Ports in LISTEN or ESTABLISHED state. |
| R | PortNumber | unsignedlnt | Port number. |
| R | Protocol | string(64) | The protocol running on the port, e.g. UDP, TCP. |
| R | LocalAddress | string(64) | Connection local address. |
| R | RemoteAddress | string(64) | This parameter is the IP address of the source of inbound packets. An empty string indicates a 'wildcard' (this will be a wildcard in most cases) because only connections in ESTABLISHED state have remote addresses. |
| | Device. Services. | object | Set of tests in the device. |

### FUNCTIONALITY: COLOR BAR

| | | | |
|---|---|---|---|
| RW | X_<*VENDOR*>_GenerateColorBar | boolean | If the value for this parameter is true the STB generates a color bar in the TV set otherwise it disables the color bar. |

### FUNCTIONALITY: HDD DEFRAGMENTATION

| | | | |
|---|---|---|---|
| RW | X_*<VENDOR>_HardDiskDriveDefrag* | boolean | If the value is true this causes the STB to perform disk de-fragmentations. |
| R | X_*<VENDOR>_DefragmentationLevel* | unsignedlnt | The value in percentage or the fragmentation level. |

### FUNCTIONALITY: AUTO DIAGNOSTIC

| | | | |
|---|---|---|---|
| RW | X_<*VENDOR*>_Autodiagnostic | boolean | If the value is true, the auto diagnostics test starts. |
| R | X_<*VENDOR*>_Autodiagnostic NumberOfEntries | unsignedlnt | Number of instances for this service. The value must be (at least) one. |
| | Device.Services.X_<*VENDOR*> _Autodiagnostic.{i}. | object | The device enters in auto diagnostics mode performing a set of tests.. |
| RW | DiagnosticsState | string(64) | Indicates availability of diagnostic data. One of: |
| | | | "None" |
| | | | "Requested" |
| | | | "Complete" |
| | | | "Error" |
| | | | Value may be set to Requested to initiate the diagnostic test. When writing, the only allowed value is Requested. |
| | | | When the diagnostics is initiated by the ACS is completed (successfully or not), the CPE establishes a new connection to the ACS to allow the ACS to view the results, indicating the Event code "8 DIAGNOSTICS COMPLETE" in the inform message. |
| R | ColorBarTest | string(16) | Possible values: "OK", "FAILURE" |
| R | HardwareCheck | string(16) | Possible values: "OK", "FAILURE" |
| R | FrequencyScanning | unsignedlnt | This parameter indicates the number of transponders found after scanning. |

### FUNCTIONALITY: DVB

| | | | |
|---|---|---|---|
| | Device.STBDevice.{i}.AVProfile. AVPlayer.{i}.X_<*VENDOR*>_DVB | Object | Optional. This object contains information about the DVB stream, if such exists. |
| R | ChannelNumber | unsignedlnt | The channel reference number in the Electronic Programming Guide (EPG). |
| R | ChannelFrequency | unsignedlnt | The frequency of the channel in MHz. |
| R | QualityMetricsNumberOfEntries | unsignedlnt | The number of samples for the quality metrics. |
| | Device.STBDevice.{i}.AVProfile. AVPlayer.{i}.X_<*VENDOR*> _DVB.QualityMetrics.{i}. | Object | This object comprises several instances of the quality metrics. There are many instances of this object with different values taken every 5 seconds in maximum of 200 values. |
| R | BER | unsignedlnt | The bit error rate for the channel currently tuned. |
| R | SNR | unsignedlnt | The signal to noise ratio of the currently tuned channel in dB. |

### FUNCTIONALITY: USER PROFILE

| | | | |
|---|---|---|---|
| | Device.STBDevice.{i}. X_<*VENDOR*>_UserProfile. | object | This object contains the user preferences. |
| RW | Acknowledge | Boolean | The acknowledge necessary to get the data from the client device. |
| R | UILanguage | string(256) | Language of UI selected by the user |
| R | AudioLanguage | string(256) | Audio language selected by the user |
| R | VideoOutputMode | string(64) | Video output stream type (ex.: 4/3, 16/9) |
| R | SettingsNumberOfEntries | unsignedlnt | The number of viewers existing in user account. |
| | Device.STBDevice.{i}. | object | This object contains the information about the user. |
| | X_<*VENDOR*>_UserProfile. X_<*VENDOR*>_Settings.{j}. | | |
| R | Name | string(256) | The name of user profile |
| R | MasterView | boolean | If the viewer is a master viewer or not |
| R | ShowAllTitles | boolean | If the user has parental control enabled; indicates if the user wants to see the titles of the blocked videos without inserting a PIN. |
| R | ShowGuidelnformation | boolean | Show information when changing channels |
| R | ParentalControlsEnable | boolean | If the parental controls are enabled |
| R | LockUnratedShows | boolean | Lock unrated shows |
| R | PageUpDownEnable | boolean | Use CH+/- as Page Up/Down buttons |
| R | TVRating | string(256) | Name of the MPAA rating code selected by the user |
| R | MovieRating | string(256) | Name of the VCHIP rating code selected by the user |
| R | EnabIeSettingsPIN | boolean | If the settings PIN is enabled |
| R | EnabIePurchasePIN | boolean | If the purchased PIN is enabled |
| R | BlockedExtendedRatings | String(256) | Name of the extended rating codes selected by the user (separated comma list). |

Some objects may already exist; in such case, parameters are added inside said objects.

A framework using TR-069 protocol may be extended in order to support the parameters/objects defined herein. Thus, additional functionalities become available.

### Further advantages:

The concept described herein can be used to enhance any video delivery or IPTV products with new functionalities for remote management frameworks.

In addition, any framework using the TR-069 protocol can be extended with additional functionalities as suggested.

### Abbreviations:

- ACS: Auto-Configuration Server
- BER: Bit Error Rate
- CPE: Customer Premises Equipment
- CPU: Central Processing Unit
- DHCP: Dynamic Host Configuration Protocol
- DVB: Digital Video Broadcasting
- GUI: Graphical User Interface
- HDD: Hard-Disc Drive
- IP: Internet Protocol
- IPTV: IP Television
- O&M: Operation and Maintenance
- QoE: Quality of (User) Experience
- QoS: Quality of Service
- RM: Remote Management
- SNR: Signal to Noise Ratio
- STB: Set Top Box
- TR-069: technical report TR-069 ("CPE WAN Management Protocol") issued by the DSL Forum www.dslforum.org
- UI: User Interface

## Claims

1. A method for data processing,
- wherein a backend device is remotely triggered to initiate a service on a client device,
- wherein said service is a service for IPTV-oriented management and/or diagnosis.

2. The method according to claim 1, wherein the backend device is remotely triggered by a front-end.

3. The method according to claim 2, wherein said front-end is accessible via a common interface, in particular via the Internet.

4. The method according to any of the preceding claims, wherein the client device is associated with and/or comprises at least one of the following:
- a set-top box;
- a computer device, in particular a personal computer;
- a DVD receiver;
- a mobile device;
- a personal digital assistant;
- a mobile phone;
- an interface device, in particular a mobile interface device.

5. The method according to any of the preceding claims, wherein the backend device is associated with and/or comprises at least one of the following:
- a server, in particular a content server;
- an operation and maintenance center;
- a device deployed with an operator or service provider;
- a remote communication entity.

6. The method according to any of the preceding claims, wherein said service comprises at least one of the following:
- enable disable a test signal, in particular a color bar;
- process and/or initiate a hard-disc de-fragmentation;
- process and/or initiate an auto diagnostics;
- provide a ports list, in particular to the backend device;
- provide information regarding digital video broadcasting;
- provide a user profile, in particular to the backend device.

7. The method according to any of the preceding claims, wherein a TR-069 protocol is used and/or extended for a communication between the client device and the backend device.

8. A device for processing data comprising a and/or associated with a processor unit and/or a hard-wired circuit and/or a logic device that is arranged such that the method according to any of the preceding claims is executable thereon.

9. The device according to claim 8, wherein said device is a communication device.

10. The device according to any of claims 8 or 9, wherein said device is a or associated with at least one of the following:
- a device deployed with a provider or operator;
- a device deployed with a customer premises equipment.

11. The device according to any of claims 8 to 10, wherein said device runs an extended version of a TR-069 protocol.

12. Communication system comprising the device according to any of claims 8 to 11.
